# EUROPÄISCHE PATENTSCHRIFT

(11) **EP 3 064 312 B1**
(45) Veröffentlichungstag und Bekanntmachung des Hinweises auf die Patenterteilung: **03.07.2019**
(21) Anmeldenummer: 16157553.5
(22) Anmeldetag: 26.02.2016
(51) Int. Cl.: B23P 19/00

(54) **MAGAZINTURM**
MAGAZINE TOWER
TOUR DE MAGASINS

(30) Priorität: 02.03.2015 DE 102015102967
(43) Veröffentlichungstag der Anmeldung: 07.09.2016
(73) Patentinhaber: E. Braun GmbH Entwicklung und Vertrieb von technischem Zubehör, 91126 Kammerstein (DE)
(72) Erfinder: BRAUN, Andreas, 91126 Kammerstein (DE); SCHNEIDER, Jörg, 91126 Kammerstein (DE)
(74) Vertreter: Dr. Gassner & Partner mbB

(56) Entgegenhaltungen:
- EP-A1- 0 618 022
- WO-A1-2010/012010
- US-A- 4 195 961
- US-A- 5 395 208
- US-A- 5 975 350
- US-A1- 2003 155 701
- US-A1- 2008 231 152
- Yeh: "An RFID-based manufacture process control and supply chain management in the semiconductor industry", International Journal of Information Technology and Management, 25 January 2013 (2013-01-25), page 85, XP055465473, DOI: 10.1504/IJITM.2013.051633 Retrieved from the Internet: URL:https://pdfs.semanticscholar.org/60b9/ 9270c802d14579afe1e7b5c265408569646a.pdf [retrieved on 2018-04-09]

## Beschreibung

Die Erfindung betrifft einen Magazinturm mit mehreren Kassetten zum Bereitstellen von Objekten für einen Greifer eines Roboters, wobei der Magazinturm zur Aufnahme der Kassetten ausgebildet ist, die jeweils einem bestimmten Typ von Objekten zugeordnet sind.

In vielen Produktionsbereichen werden Roboter in zunehmendem Maße für Montagetätigkeiten eingesetzt. Mittels des Greifers werden einzelne Objekte, Komponenten oder Bauteile gegriffen und montiert, indem eine Reihe von Montageschritten automatisch durchgeführt wird. Die einzelnen Objekte können beispielsweise ungeordnet in einem Behälter oder geordnet, beispielsweise gestapelt, bereitgestellt werden. Für bestimmte Anwendungen ist es erforderlich, eine Vielzahl unterschiedlicher Einzelteile zu montieren. Dabei bewegt sich der Greifer abwechselnd zwischen einem Montageplatz und den losen oder z. B. gestapelten Einzelteilen hin und her. Bei einer hohen Anzahl unterschiedlicher Objekte kann dies dazu führen, dass jedes Objekt einzeln von dem Greifer geholt werden muss, wodurch sich eine lange Montagezeit ergibt.

Ein spezielles Anwendungsgebiet für einen an einem Roboterarm befestigter Greifer ist die Bestückung von sogenannten Hutschienen mit elektrischen Komponenten, insbesondere Klemmen. Die bestückten Hutschienen werden anschließend in ein Schaltschrankgehäuse eingebaut und verdrahtet. Derartige Schaltschränke werden sowohl in der Gebäudeinstallationstechnik als auch zur elektrischen Steuerung von Maschinen und Anlagen benötigt.

Bei der Bestückung von Hutschienen besteht das Problem, dass häufig eine Vielzahl unterschiedlicher Komponenten zu montieren ist, insbesondere unterschiedlich geformte Klemmen, die sich sowohl hinsichtlich ihrer Form als auch hinsichtlich ihrer Größe unterscheiden. Häufig werden auch Produkte verschiedener Hersteller eingesetzt, wodurch sich die Variantenvielfalt erhöht. In der Praxis werden daher bisher auch größere Stückzahlen identischer Schaltschränke bzw. Hutschienen manuell bestückt. Es ist allerdings schwierig, dabei eine 100%ige Fehlerfreiheit sicherzustellen bzw. eine falsch montierte oder eine fehlende Klemme zu finden. Ein weiterer Nachteil ist darin zu sehen, dass die bisher übliche manuelle Montage einen beträchtlichen Zeitbedarf erfordert.

Aus der DE 10 2009 017 999 A1 ist eine Montageanordnung bekannt, die mehrere halbkreisförmig angeordnete Magazine umfasst, die jeweils mit Objekten wie Reihenklemmen bestückt sind. Die Reihenklemmen sind in dem Magazin gestapelt, am unteren Ende eines Stapels greift ein Greifer in Ausnehmungen einer Reihenklemme ein, um die Reihenklemme anschließend auf einer Tragschiene zu montieren.

Die DE 10 2010 047 369 A1 schlägt eine Montagevorrichtung vor, bei der in einem Magazin gestapelte Klemmen am unteren Ende des Magazins mittels eines Roboters entnommen und auf einer Tragschiene platziert werden. WO2010/012010 A1 offenbart ferner einen Magazinturm gemäß dem Oberbegriff des Anspruchs 1.

Der Erfindung liegt die Aufgabe zugrunde, einen Magazinturm anzugeben, der die Übergabe eines in dem Magazinturm bereitgestellten Objekts an den Greifer eines Roboters erleichtert.

Zur Lösung dieser Aufgabe ist einen Magazinturm gemäß Anspruch 1 vorgesehen.

Anders als bei im Stand der Technik bekannten Magazinen ist erfindungsgemäß eine Übergabe eines Objekts am oberen Ende des Magazinturms vorgesehen.

Der Magazinturm umfasst mehrere Kassetten, die jeweils mit unterschiedlichen Objekten bestückt sind. Jede Kassette ist mit einem bestimmten Objekt bestückt. Die erfindungsgemäß vorgesehene Übergabe eines Objekts aus einer Kassette an deren Oberseite weist den Vorteil auf, dass keine Beeinträchtigung durch das Eigengewicht der gestapelten Objekte stattfindet.

Dementsprechend können praktisch beliebig lange bzw. beliebig hohe Kassetten eingesetzt werden, bei denen jeweils das oberste Objekt zuverlässig für eine Übergabe an einen Greifer bereitgestellt wird.

Grundsätzlich ist der erfindungsgemäße Magazinturm für jegliche Objekte geeignet, die in Kassetten stapelbar sind. Vorzugsweise handelt es sich bei den Objekten um plattenförmige oder quaderförmige Objekte, besonders bevorzugt kann der erfindungsgemäße Magazinturm für Reihenklemmen, Abdeckplatten, Schütze und weitere Komponenten verwendet werden, die üblicherweise in einem Schaltschrank eingebaut sind. Es kann sich dabei sowohl um elektrotechnische Komponenten handeln, die üblicherweise im Rahmen der Gebäudeinstallationstechnik verwendet werden, wie auch um Objekte, die für Maschinen- und Anlagensteuerungen benötigt werden und die in einem Schaltschrank angeordnet sind. Die Montage erfolgt mittels eines Greifers, der an einem Roboterarm montiert ist. Auf der Basis eines Bestückungsplans montiert der Greifer die einzelnen elektrischen Komponenten, insbesondere Reihenklemmen auf einer Hutschiene (Tragschiene), indem er nacheinander die einzelnen zu montierenden Objekte an einem Magazinturm aufnimmt, zu einem Montageort bewegt und dort auf einer Hutschiene montiert.

Um die Montage zu vereinfachen, wird bevorzugt, dass mehrere derartige Magazintürme vorhanden sind, die z. B. in einer Reihe angeordnet sind. Selbstverständlich können auch mehrere vorzugsweise parallele Reihen vorgesehen sein, zwischen denen ein Roboter verfahren werden kann, so dass er mehrere unterschiedliche Objekte von verschiedenen Kassetten und/oder verschiedenen Magazintürmen im Rahmen eines Transportvorgangs aufnimmt. Alternativ können mehrere Magazintürme auch z. B. kreisförmig angeordnet sein, so dass der Roboter lediglich eine Drehbewegung ausführen muss, um einen bestimmten Magazinturm zu erreichen.

Bei dem erfindungsgemäßen Magazinturm wird es besonders bevorzugt, dass jedem der unterschiedlichen Typen von Objekten eine an die Form und/oder die Größe der Objekte angepasste Platte zugeordnet ist. Die Platte ist jeweils am unteren Ende eines Stapels der Objekte in einer Kassette angeordnet. Da die Kassetten in Längsrichtung offen sind und einen Spalt aufweisen, kann ein fingerartiges Betätigungselement in den Spalt eingreifen, so dass er das unterste Objekt berührt und den Stapel der Objekte anhebt. Der Stapel der Objekte kann jeweils um einen bestimmten Hub angehoben werden. Vorzugsweise entspricht der Hub der Dicke eines Objekts, so dass mit jedem Hub ein Objekt in die Übergabeposition gebracht wird. An der Übergabeposition kann das oberste Objekt einer Kassette somit von dem Greifer aufgenommen werden.

Erfindungsgemäß ist an der Oberseite einer Kassette ein das oberste Objekt umgebende Formteil angeordnet, dessen Ausnehmung an die Außenkontur der jeweiligen Objekte angepasst ist. Dadurch wird sichergestellt, dass jedes Objekt exakt an der Übergabeposition bereitgestellt wird, so dass es zuverlässig und schnell von dem Greifer aufgenommen werden kann. Das Formteil dient dazu, etwaige Positionstoleranzen auszugleichen, so dass alle Objekte an derselben Übergabeposition bereitgestellt werden.

Um die Bereitstellung der Objekte zu automatisieren, kann es vorgesehen sein, dass jede Kassette einen RFID-Transponder und/oder einen QR-Code aufweist, der mittels eines an dem Magazinturm angeordneten Lesegeräts auslesbar ist. Durch den RFID-Transponder und/oder den QR-Code ist eine eindeutige Identifizierung der Objekte möglich. Auf diese Weise kann automatisch erkannt werden, welche Objekte in einer bestimmten Kassette enthalten sind. Dementsprechend kann ein Magazinturm in einer beliebigen Reihenfolge mit Kassetten bestückt sein, wobei jede Kassette Objekte eines bestimmten Typs enthält. Das Lesegerät ist vorzugsweise so an dem Magazinturm angebracht, dass durch Drehen des Drehtellers alle Kassetten an dem Magazinturm vorbeigeführt werden, so dass erfasst werden kann, welche Art von Objekten sich in einer bestimmten Kassette befindet. Diese den Typ von Objekten betreffende Informationen können gespeichert werden, eine Steuerungseinrichtung kann anschließend auf diese gespeicherten Informationen zugreifen. Wenn der Magazinturm von dem Robotergreifer oder von einer diesem zugeordneten Steuerungseinrichtung die Anforderung erhält, ein bestimmtes Objekt bereitzustellen, kann anhand der gespeicherten Informationen ermittelt werden, in welcher Kassette sich die entsprechenden Objekte befinden. Daraufhin wird der Drehteller des Magazinturms gedreht, bis sich die entsprechende Kassette in der Übergabeposition befindet. Anschließend wird der Stapel der Objekte in dieser Kassette angehoben, so dass das oberste Objekt in die Übergabeposition gebracht wird, in der es von dem Greifer aufgenommen werden kann. Alternativ oder zusätzlich kann auch jedes Objekt einen RFID-Transponder oder einen QR-Code aufweisen, vorzugsweise erfolgt die Identifizierung jedoch anhand eines an oder auf der Kassette angeordneten RFID-Transponders oder eines QR-Codes.

Besonders bevorzugt wird es bei dem erfindungsgemäßen Magazinturm, dass er ein Mittel zum Erkennen des Befüllungsstands einer Kassette aufweist. Auf diese Weise kann rechtzeitig eine andere Kassette ausgewählt werden, wenn eine Kassette vollständig entleert ist. Das Mittel zum Erkennen des Befüllungsstands kann als mechanischer Sensor, als optischer Sensor, als kapazitiver Sensor und dergleichen ausgebildet sein.

Eine Weiterbildung der Erfindung sieht vor, dass der erfindungsgemäße Magazinturm eine Hubwechseleinheit mit einem hydraulischen, pneumatischen oder elektrischen Antrieb aufweist. Die Hubwechseleinheit erleichtert das automatische Einsetzen und/oder Entnehmen einer Kassette in bzw. aus dem Magazinturm. Dadurch ergibt sich der Vorteil, dass das Auswechseln einer Kassette automatisch und somit ohne den Eingriff eines Bedieners möglich ist. Die Kassetten können wiederum an einer anderen Stelle bereitgestellt werden, so dass der Robotergreifer nicht nur die einzelnen Objekte aufnimmt und montiert, sondern auch automatisch die mit den Objekten bestückten Kassetten austauscht.

Es liegt auch im Rahmen der Erfindung, dass der Antrieb zum Anheben der in der Kassette gestapelten Objekte als Spindeltrieb ausgebildet ist. Daneben sind natürlich auch andere Antriebe denkbar.

Eine Weiterbildung des erfindungsgemäßen Magazinturms sieht vor, dass er ein lonisationsgebläse aufweist, das vorzugsweise im Bereich der Übergabeposition angeordnet ist. Durch das lonisationsgebläse kann eine gegebenenfalls vorhandene statische Aufladung von Objekten eliminiert werden.

Vorzugsweise weist der erfindungsgemäße Magazinturm eine Steuerungseinrichtung auf, die dazu ausgebildet ist, den Drehteller in eine bestimmte Position zu bewegen und/oder die in der Kassette gestapelten Objekte vertikal zu bewegen.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Figur 1: ein erstes Ausführungsbeispiel eines erfindungsgemäßen Magazinturms in einer perspektivischen Ansicht;
- Figur 2: eine vergrößerte Ansicht des oberen Bereichs des in Figur 1 gezeigten Magazinturms;
- Figur 3: eine vergrößerte Ansicht des unteren Bereichs des in Figur 1 gezeigten Magazinturms;
- Figur 4: eine perspektivische Ansicht einer Kassette für den erfindungsgemäßen Magazinturm;
- Figur 5: eine vergrößerte Ansicht des oberen Endes der in Figur 4 gezeigten Kassette; und
- Figur 6: eine vergrößerte Ansicht des unteren Endes der in Figur 4 gezeigten Kassette.

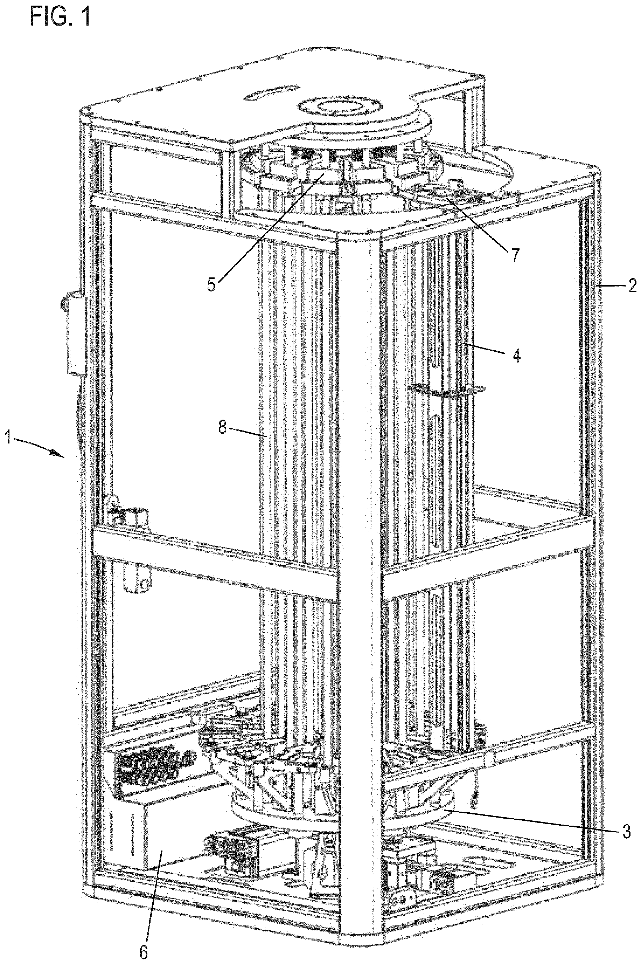

Der in Figur 1 gezeigte Magazinturm 1 dient zum Bereitstellen von Objekten für einen Greifer eines Roboters. Der Magazinturm 1 umfasst einen quaderförmigen Rahmen 2, in dem ein Drehteller 3 aufgenommen ist. Der Drehteller 3 umfasst mehrere in Umfangsrichtung angeordnete Positionen für Kassetten 4, wobei jede Kassette 4 mit einem Typ von Objekten befüllt ist. In Figur 1 ist lediglich eine einzige Kassette 4 dargestellt. In dem dargestellten Ausführungsbeispiel handelt es sich bei den Objekten um unterschiedliche Typen von Reihenklemmen sowie um andere elektrische Bauteile, mit denen Hutschienen bestückt werden, die anschließend in einem Schaltschrank befestigt werden.

Der Magazinturm 1 weist eine Steuerungseinrichtung 6 auf, die lediglich schematisch dargestellt ist und die den Drehteller 3 steuert. Durch Drehen des Drehtellers 3 kann jeweils eine der Kassetten 4, die auf dem Drehteller 3 positioniert sind, in eine Übergabeposition bewegt werden. In dem dargestellten Ausführungsbeispiel ist der Magazinturm 1 für die Aufnahme von zwölf Kassetten 4 ausgelegt. Der Magazinturm 1 ist an der Rückseite offen, wodurch das Einsetzen der Kassetten 4 ermöglicht wird.

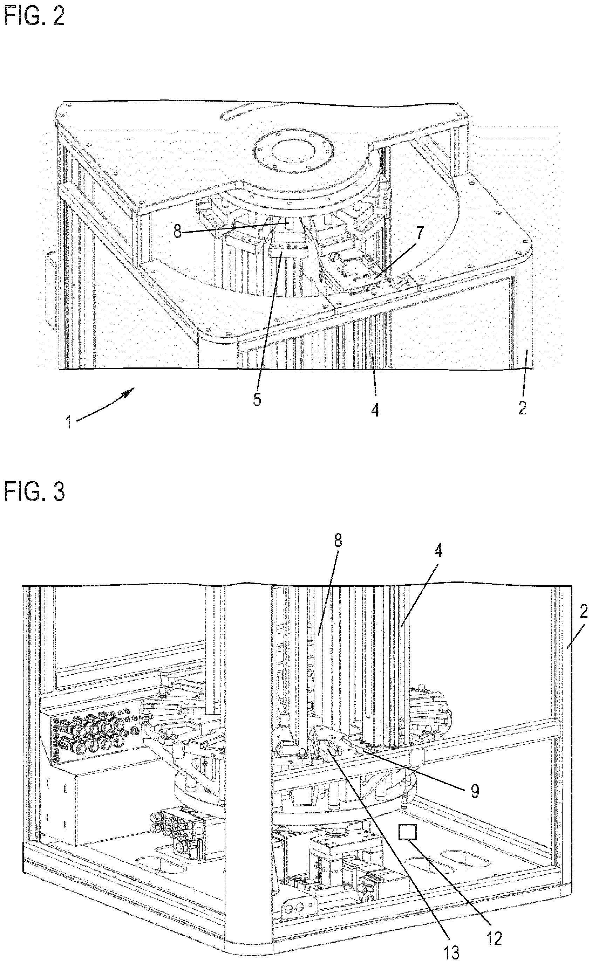

Figur 2 ist eine vergrößerte Ansicht des oberen Bereichs des in Figur 1 gezeigten Magazinturms 1. In Figur 2 erkennt man, dass an jeder Position des Drehtellers 3 in Umfangsrichtung, an der eine Kassette 4 angebracht werden kann, eine Aufnahme 5 vorhanden ist, um eine Kassette 4 mit ihrem oberen Ende anzukuppeln. Die einzelnen Kassetten 4 sind jeweils mit einem bestimmten Typ von Objekten befüllt. In dem dargestellten Ausführungsbeispiel handelt es sich dabei um Reihenklemmen, die in der Kassette 4 oder in einer Verpackung, die in die Kassette 4 eingesetzt ist, gestapelt sind. Der Magazinturm 1 kann mit bis zu zwölf unterschiedlichen Objekten wie Reihenklemmen, Relais, Sicherungen, Schützen usw. bestückt werden. Eine Kassette 4 kann entweder manuell mit Objekten befüllt werden, alternativ kann eine Verpackung, die die Objekte enthält, in die Kassette 4 eingesetzt werden. Die Verpackung wird dann oben, unten und seitlich geöffnet, sodass die darin gestapelten Objekte zugänglich sind. Optional weist der Magazinturm 1 ein lonisationsgebläse auf, um eine statische Aufladung beim Fördern der Objekte zu vermeiden.

Das am oberen Ende der Kassette angeordnete Formteil 7 dient dazu, das oberste Objekt, das heißt die oberste Reihenklemme, beim Anheben des Stapels exakt auszurichten und zu positionieren, so dass alle Objekte an einer definierten Übergabeposition bereitgestellt werden. An dieser Übergabeposition kann das jeweils oberste Objekt von einem Greifer eines Roboterarms aufgenommen und an eine Montageposition bewegt werden. Die einzelnen Kassetten 4 weisen unterschiedlich geformte Formteile 7 auf, wobei jedes Formteil 7 an dasjenige Objekt angepasst ist, das in der entsprechenden Kassette 4 aufgenommen ist.

Um eine bestimmte Reihenklemme an der Oberseite des Magazinturms 1 bereitzustellen, wird zunächst der Drehteller 3 soweit gedreht, bis sich die entsprechende Kassette 4, in der sich die benötigte Reihenklemme befindet, an der Übergabeposition befindet. Jeder Kassette 4 ist eine Spindel 8 zugeordnet, die zwischen zwei Stangen gehalten ist. Wenn eine Kassette 4 in die Übergabeposition gedreht wird, wird ein Antrieb an die Spindel 8 angekuppelt, so dass die Spindel 8 gedreht werden kann. Beim Drehen der Spindel 8 wird ein sich senkrecht zur Spindelachse erstreckender, mit einer Spindelmutter verbundener Finger in Längsrichtung der Spindel 8 bewegt, der an dem untersten in einer Kassette 4 gestapelten Objekt angreift. Dadurch wird der Stapel der Objekte, der sich in der entsprechenden Kassette 4 befindet, gesteuert angehoben, wobei der Hub näherungsweise der Dicke des entsprechenden Objekts entspricht. Objekte unterschiedlicher Dicke erfordern somit eine unterschiedliche Anzahl von Umdrehungen. Beim Anheben des Stapels durch Drehen der Spindel 8 wird das oberste Objekt des Stapels durch das Formteil 7 der Kassette 4 geführt, bis es sich in einer erhöhten Position gegenüber dem Formteil 7 befindet. In dieser exakt ausgerichteten und erhöhten Position kann das Objekt von dem Greifer aufgenommen werden.

Figur 3 ist eine vergrößerte Ansicht des unteren Bereichs des Magazinturms 1. In Figur 3 erkennt man, dass der Drehteller 3 die in Umfangsrichtung angeordneten Positionen für die Kassetten 4 aufweist. An jeder für eine Kassette 4 vorgesehenen Position ist eine Aufnahme 13 vorgesehen, in die die Kassette 4 mit ihrer unteren Platte 9 eingreift, so dass sie dort angekuppelt werden kann. Dementsprechend weist der Drehteller 3 insgesamt zwölf über den Umfang verteilte Aufnahmen 13 auf.

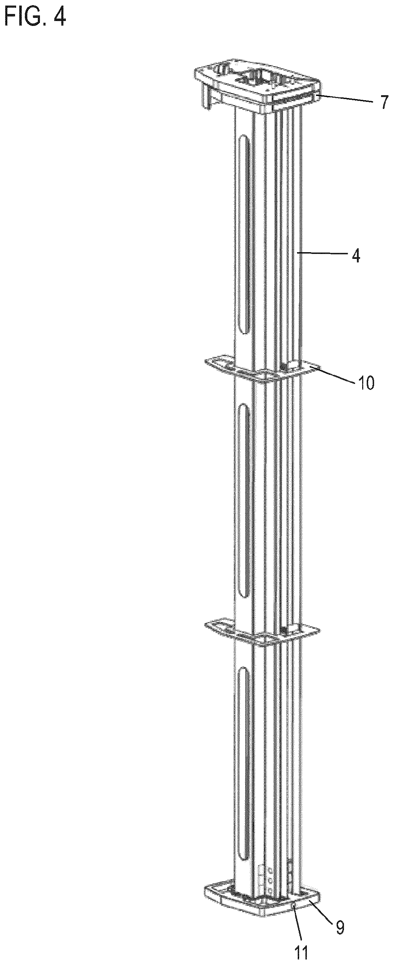

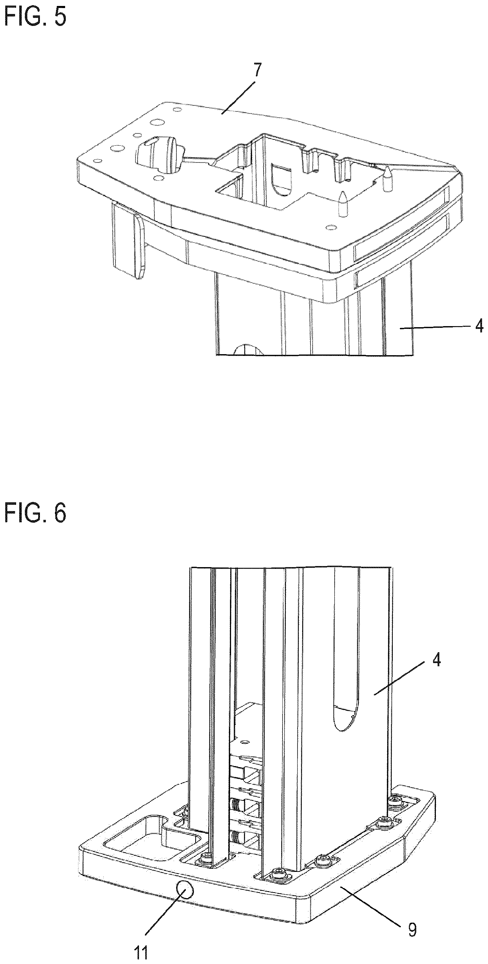

Figur 4 ist eine perspektivische Ansicht der Kassette 4, die am unteren Ende die Platte 9 und am oberen Ende das Formteil 7 aufweist. Figur 5 ist eine vergrößerte Ansicht des oberen Endes der Kassette 4 und Figur 6 ist eine vergrößerte Ansicht des unteren Endes der Kassette 4. Im mittleren Bereich der Kassette 4 sind außenseitig zwei voneinander beabstandete, horizontale Versteifungsrippen 10 vorhanden, die die Stabilität der Kassette 4 erhöhen. Jede Kassette 4 weist einen RFID-Transponder 11 auf, der mittels eines in Figur 3 schematisch dargestellten Lesegeräts 12 ausgelesen werden kann. Jedem Typ von Objekten, das heißt jeder Reihenklemme und jedem anderen plattenförmigen Bauteil ist eine spezifische Kodierung mittels des RFID-Transponders 11 zugeordnet. Auf diese Weise kann automatisch durch das Lesegerät 12 erfasst werden, welche Objekte in einer bestimmten Kassette 4 aufgenommen sind. Auf diese Weise ist eine Identifikation der Objekte durch Erkennen des RFID-Transponders 11 einer Kassette 4 möglich. Dementsprechend ist es nicht erforderlich, eine Kassette 4, die Reihenklemmen eines bestimmten Typs enthält, auf eine bestimmte Position des Drehtellers 3 zu setzen, vielmehr können die Kassetten 4 beliebig positioniert werden. Alternativ kann eine Verpackung, in der die Objekte gestapelt bereitgestellt werden, einen RFID-Transponder aufweisen. Die Verpackungen können dann beliebig in irgendeine Kassette 4 eingesetzt werden. Anschließend wird der Drehteller 3 unter der Steuerung der Steuerungseinrichtung 6 solange gedreht, bis alle eingesetzten Kassetten das Lesegerät 12 passiert haben. Dadurch kann eindeutig erfasst werden, an welchen Positionen Kassetten 4 vorhanden sind und mit welchen Objekten die Kassetten 4 jeweils befüllt sind. Das Lesegerät 12 ist zusätzlich dazu ausgebildet, einen auf einer Verpackung oder auf einem Magazin aufgebrachten oder aufgedruckten Code zu lesen. Der Code kann ein Strichcode oder ein QR-Code sein.

Wenn die Steuerungseinrichtung 6 von dem Robotergreifer oder von einer dem Robotergreifer zugeordneten Steuerungseinrichtung den Auftrag erhält, ein bestimmtes Objekt bereitzustellen, wird ermittelt, in welcher Kassette 4 sich das benötigte Objekt befindet. Daraufhin steuert die Steuerungseinrichtung 6 den Drehteller 3 so, dass die entsprechende Kassette 4 in die Übergabeposition gedreht wird. Anschließend wird durch Drehen der Spindel 8 der mit der Spindelmutter verbundene Finger soweit angehoben, bis das benötigte Objekt nach dem Passieren des Formteils 7 an der Oberseite der Kassette 4 bereitgestellt ist, so dass es von dem Robotergreifer aufgenommen werden kann.

Bei anderen Ausführungen können mehrere identisch aufgebaute Magazintürme 1 vorgesehen sein, die durch eine zentrale Steuerungseinrichtung gesteuert werden.

## Patentansprüche

1. Magazinturm (1) mit mehreren Kassetten (4) zum Bereitstellen von Objekten für einen Greifer eines Roboters, wobei der Magazinturm (1) zur Aufnahme der Kassetten (4) ausgebildet ist, die jeweils einem bestimmten Typ von Objekten zugeordnet sind, wobei der Magazinturm (1) einen Drehteller (3) umfasst, der mehrere in Umfangsrichtung angeordnete Positionen für Kassetten (4) aufweist, von denen jeweils eine Kassette (4) durch Drehen des Drehtellers (3) in eine Übergabeposition bewegbar ist, um in der Kassette (4) enthaltene Objekte mittels eines Antriebs in Längsrichtung der Kassette (4) anzuheben und das oberste Objekt in eine Übergabeposition für den Greifer zu bewegen, **dadurch gekennzeichnet, dass** an der Oberseite einer Kassette (4) ein das oberste Objekt umgebendes Formteil (7) angeordnet ist, das eine Ausnehmung aufweist, die an die Außenkontur der jeweiligen der Kassette zugeordneten Objekte angepasst ist, wobei das Formteil (7) dazu dient, das oberste Objekt beim Anheben der in der Kassette (4) enthaltenen Objekte exakt auszurichten und zu positionieren, indem der Magazinturm (1) dazu ausgebildet ist, das oberste Objekt durch das Formteil (7) der Kassette (4) zu führen, bis es sich nach dem Passieren des Formteils (7) in einer erhöhten Position gegenüber dem Formteil (7) befindet.

2. Magazinturm nach Anspruch 1, **dadurch gekennzeichnet, dass** jedem der unterschiedlichen Typen von Objekten eine an die Form und/oder Größe der Objekte angepasste Platte (9) zugeordnet ist.

3. Magazinturm nach einem der vorangehenden Ansprüche, **dadurch gekennzeichnet, dass** jede Kassette (4) einen RFID-Transponder (11) und/oder einen QR-Code aufweist, der mittels eines an dem Magazinturm angeordneten Lesegeräts (12) auslesbar ist.

4. Magazinturm nach einem der vorangehenden Ansprüche, **dadurch gekennzeichnet, dass** er ein Mittel zum Erkennen des Befüllungsstands einer Kassette (4) aufweist.

5. Magazinturm nach einem der vorangehenden Ansprüche, **dadurch gekennzeichnet, dass** er eine Hubwechseleinheit mit einem hydraulischen, pneumatischen oder elektrischen Antrieb aufweist.

6. Magazinturm nach einem der vorangehenden Ansprüche, **dadurch gekennzeichnet, dass** der Antrieb zum Anheben der Objekte als Spindeltrieb ausgebildet ist.

7. Magazinturm nach einem der vorangehenden Ansprüche, **dadurch gekennzeichnet, dass** er ein lonisationsgebläse aufweist, das vorzugsweise im Bereich der Übergabeposition angeordnet ist.

8. Magazinturm nach einem der vorangehenden Ansprüche, **dadurch gekennzeichnet, dass** er eine Beladevorrichtung zum Wechseln der Kassetten (4) aufweist.

9. Magazinturm nach einem der vorangehenden Ansprüche, **dadurch gekennzeichnet, dass** er eine Steuerungseinrichtung (6) aufweist, die dazu ausgebildet ist, den Drehteller in eine bestimmte Position zu bewegen und/oder die gestapelten Objekte vertikal zu bewegen.

## Claims

1. A magazine tower (1) having several cassettes (4)
for providing objects for a gripper of a robot, the magazine tower (1) being designed to receive the cassettes (4) which each are associated to a specific type of object, the magazine tower (1) comprising a turntable (3) which has a plurality of circumferentially arranged positions for cassettes (4), whereof in each case one respective cassette (4) is able to be moved into a delivery position by rotating the turntable (3) to lift objects contained in the cassette (4) by means of a drive in the longitudinal direction of the cassette (4) and to move the uppermost object into a delivery position for the gripper, **characterized in that** a molded part (7) surrounding the uppermost object is arranged on the upper side of a cassette (4) and comprising a recess adapted to the outer contour of the respective objects associated to the cassette, the molded part (7) is intended to accurately align and position the uppermost object when lifting the objects contained in the cassette (4) in that the magazine tower (1) is designed to pass the uppermost object through the molded part (7) of the cassette (4) until it is in an elevated position relative to the molded part (7) after passing through the molding (7).

2. The magazine tower according to claim 1, **characterized in that** a plate (9) adapted to the shape and/or size of the objects is associated to each one of the different types of objects.

3. The magazine tower according to one of the preceding claims, **characterized in that** each cassette (4) has an RFID transponder (11) and/or a QR code which can be read out by means of a reading device (12) arranged at the magazine tower.

4. The magazine tower according to one of the preceding claims, **characterized in that** it comprises a means for detecting the filling level of a cassette (4).

5. The magazine tower according to one of the preceding claims, **characterized in that** it comprises a stroke changing unit having a hydraulic, pneumatic or electric drive.

6. The magazine tower according to one of the preceding claims, **characterized in that** the drive for lifting the objects is designed as a spindle drive.

7. The magazine tower according to one of the preceding claims, **characterized in that** it comprises an ionization blower which is preferably arranged in the region of the delivery position.

8. The magazine tower according to one of the preceding claims, **characterized in that** it comprises a loading device for changing the cassettes (4).

9. The magazine tower according to one of the preceding claims, **characterized in that** it comprises a control device (6) designed to move the turntable into a predetermined position and/or to move the stacked objects vertically.

## Revendications

1. Tour de magasin (1) comprenant plusieurs cassettes (4) destinées à la préparation d'objets pour un dispositif de préhension d'un robot, en ce que la tour de magasin (1) est conçue pour le logement des cassettes (4) qui sont respectivement associées à un type défini d'objets, en ce que la tour de magasin (1) comporte un plateau tournant (3) qui présente dans le sens périphérique des positions assignées à des cassettes (4), à partir desquelles respectivement une cassette (4) peut être déplacée par rotation du plateau tournant (3) dans une position de transfert pour soulever des objets contenus dans la cassette (4) au moyen d'un entraînement dans le sens longitudinal de la cassette (4) et pour déplacer l'objet supérieur dans une position de transfert pour le dispositif de préhension,
**caractérisée en ce qu'**une pièce moulée (7) entourant l'objet supérieur est disposée sur le côté supérieur d'une cassette (4), ladite pièce moulée comporte un évidement qui est adapté au contour extérieur des objets respectivement associés à la cassette, **en ce que** la pièce moulée (7) sert à aligner exactement et à positionner l'objet supérieur lors du soulèvement des objets contenus dans la cassette (4), **en ce que** la tour de magasin (1) est conçue pour guider l'objet supérieur par la pièce moulée (7) de la cassette (4) jusqu'à ce qu'il soit, après avoir passé la pièce moulée (7), dans une position élevée par rapport à la pièce moulée (7).

2. Tour de magasin selon la revendication 1, **caractérisée en ce qu'**une plaque (9) ajustée à la forme et/ou la taille des objets est associée à chacun des différents types d'objets.

3. Tour de magasin selon l'une des revendications précédentes, **caractérisée en ce que** chaque cassette (4) comporte un transpondeur RFID (11) et/ou un code QR qui peut être lu au moyen d'un lecteur (12) disposé sur la tour de magasin.

4. Tour de magasin selon l'une des revendications précédentes, **caractérisée en ce qu'**elle comporte un moyen de détection du niveau de remplissage d'une cassette (4).

5. Tour de magasin selon l'une des revendications précédentes, **caractérisée en ce qu'**elle comporte une unité de changement de course avec un entraînement hydraulique, pneumatique ou électrique.

6. Tour de magasin selon l'une des revendications précédentes, **caractérisée en ce que** l'entraînement pour soulever les objets est réalisé sous la forme de vérin à vis à billes.

7. Tour de magasin selon l'une des revendications précédentes, **caractérisée en ce qu'**elle comporte une soufflante à ionisation qui est disposée de préférence dans la zone de la position de transfert.

8. Tour de magasin selon l'une des revendications précédentes, **caractérisée en ce qu'**elle comporte un dispositif chargeur pour le remplacement des cassettes (4).

9. Tour de magasin selon l'une des revendications précédentes, **caractérisée en ce qu'**elle comporte un dispositif de commande (6) qui est conçu pour déplacer le plateau tournant dans une position définie et/ou pour déplacer verticalement les objets empilés.
